# EUROPÄISCHE PATENTSCHRIFT

(11) **EP 1 457 276 B1**
(45) Veröffentlichungstag und Bekanntmachung des Hinweises auf die Patenterteilung: **17.08.2005**
(21) Anmeldenummer: 04014286.1
(22) Anmeldetag: 04.06.2002
(51) Int. Cl.: B21D 39/04, B23P 11/02

(54) **Vorrichtung zum Verbinden zweier Bauteile**
Device for connecting two objects
Dispositif pour joindre deux objets

(30) Priorität: 13.07.2001 DE 10134086
(43) Veröffentlichungstag der Anmeldung: 15.09.2004
(62) Teilanmeldung aus: 02012247.9
(73) Patentinhaber: DaimlerChrysler AG, 70567 Stuttgart (DE)
(72) Erfinder: Spielmannleitner, Christian, 20257 Hamburg (DE)

(56) Entgegenhaltungen:
- DE-A- 19 830 623

## Beschreibung

Die Erfindung betrifft eine Vorrichtung zum Verbinden zweier Bauteile nach dem Oberbegriff des Patentanspruches 1.

Eine gattungsgemäße Vorrichtung ist beispielsweise aus der DE 198 30 623 A1 bekannt. Diese beinhaltet ein Hochdruck-Umformwerkzeug mit in dessen Gravur eingesetzten axial beabstandeten Dichtungsanordnungen. Diese Dichtungsanordnungen begrenzen einen Umformraum, in den ein Druckfluid führender Druckmittelkanal einmündet. Soll nun ein umfänglich geschlossenes Hohlprofil umgeformt werden, wird dieses in die Gravur eingelegt und so positioniert, dass der umzuformende Bereich im Umformraum der Gravur zu liegen kommt. Anschließend wird in das Hohlprofil eine Matrize eingeschoben, deren Mantelkontur die Umformkontur des umzuformenden Hohlprofils vorgibt. Danach wird das Druckfluid über den Druckmittelkanal in den Umformraum unter Hochdruck eingeleitet, wonach die Wandung des Hohlprofils gegen die Mantelkontur der Matrize angepresst wird und somit deren Form annimmt. Die Matrize ist geteilt, so dass sie nach erfolgter Umformung aus dem Hohlprofil wieder herausziehbar ist.

Des Weiteren ist auch aus der US 3,977,068 bekannt, dass ein rohrförmiges Bauteil in ein Durchgangsloch eines plattenförmigen Bauteils mit Spiel geschoben wird, wonach in das rohrförmige Bauteil eine Aufweitlanze eingeführt wird, mittels derer durch fluidischen Innenhochdruck das rohrförmige Bauteil derart plastisch aufgeweitet wird, dass es sich an die Innenseite des Durchgangsloches des plattenförmigen Bauteiles anlegt. Dieses wird im Bereich des Loches ebenfalls aufgeweitet, jedoch nur im Rahmen der Werkstoffelastizität. Nach Entspannen des Innenhochdruckes federt die Lochwandung elastisch zurück, so dass sich zwischen dem rohrförmigen und dem plattenförmigen Bauteil im Lochbereich ein nahezu unlösbarer Presssitz ergibt. Die Aufweitlanze wird durch einen Stab aus einem starren Vollmaterial, vorzugsweise aus Stahl gebildet, welcher einen axial verlaufenden Druckkanal zur Führung des Druckfluides aufweist. Der axiale Druckkanal ist eine Sackbohrung und mündet kurz vor seinem Ende in zwei radial abgehende Kanäle, die ihre Ausmündungen am Mantel des Stabes besitzen. Die Ausmündungen liegen in Gebrauchsstellung der Aufweitlanze innerhalb des aufzuweitenden Bereiches des rohrförmigen Bauteils. Dieser wird axial durch zwei voneinander beabstandeten Ringdichtungen hochdruckfest abgedichtet, die in zwei am Mantel des Stabes eingearbeiteten Ringnuten eingebracht sind.

Da die Aufweitlanze in ein rohrförmiges Bauteil eingeführt wird und aus Festigkeitsgründen einen bestimmten vom aufzubringenden Hochdruck abhängigen Mindestquerschnitt aufweisen muss, muss zwangsweise das innere Bauteil ebenfalls einen inneren Mindestdurchmesser besitzen. Die Anwendbarkeit auf innere Bauteile mit geringerem Innendurchmesser ist damit mit der bekannten Technik nicht möglich. Außerdem ist durch die Notwendigkeit des Einführens der Aufweitlanze die Voraussetzung festgelegt, dass das innere Bauteil hohl sein muss. Aufgrund der beschränkten Langzeitfestigkeit der Aufweitlanze, insbesondere bei dünneren Exemplaren, führt ein Serieneinsatz der Lanze durch den häufigen Werkzeugwechsel infolge des Werkzeugverschleißes und die damit verbundenen Ausfallzeiten zu einem relativ teueren Herstellungsprozess der Fügeverbindung.

Der Erfindung liegt nun die Aufgabe zugrunde, eine gattungsgemäße Vorrichtung dahingehend weiterzubilden, dass in einfacher Weise die Vorrichtung auf unterschiedliche Anwendungszwecke maßgeschneidert umgerüstet werden kann.

Die Aufgabe ist erfindungsgemäß durch die Merkmale des Anspruches 1 gelöst.

Aufgrund dessen, dass die umformende Beaufschlagung von außen kommt, entfällt das Erfordernis eine Aufweitlanze in ein inneres Bauteil einzuführen. Mit Entfall der Aufweitlanze ergeben sich auch für den Herstellungsprozess der Fügeverbindung zwischen den beiden Bauteilen keine Probleme hinsichtlich einer Standfestigkeitsbetrachtung, d.h. eines Verschleißes des einzuführenden Werkzeuges. Dadurch werden gleichzeitig die laufenden Kosten für die Herstellung der Verbindung verringert. Des weiteren entfällt die Abhängigkeit der Formgebung des inneren Bauteils von einem Mindestquerschnitt der Lanze. So können die inneren Bauteile nun polygonal, rohrförmig, unsymmetrisch, mehrfach gebogen oder gar aus Vollmaterial sein. Die einzigen notwendigen Kriterien für die prozesssichere Herstellung der Fügeverbindung sind zum einen die Aufschiebbarkeit des äußeren Bauteils auf das innere und zum anderen die Abstimmung der Materialien und ggf. der Wandstärken der Bauteile aufeinander, derart, dass bei der Druckfluidbeaufschlagung das äußere Bauteil plastisch und das innere Bauteil elastisch umgeformt wird. Somit besteht das Erfordernis in dem Bestehen einer umfänglich geschlossenen Öffnung des äußeren Bauteils, in oder durch das das innere geschoben oder gesteckt wird, und in der elastischen Rückfederung des Materials des inneren Bauteils nach außen gegen das plastisch geschrumpfte äußere Bauteil nach Entspannung des Druckfluides. Hieraus ergibt sich der erfindungsgemäß angestrebte Presssitz zwischen den beiden Bauteilen, der in seiner Festigkeit in vorteilhafter Weise auf den jeweiligen Anwendungszweck hin durch eine variable Steuerung der Höhe des Fluiddruckes abgestimmt werden kann, so dass damit zwischen einer Unlösbarkeit und einer ab einem bestimmten axialen mechanischen Zug oder Druck oder einem Drehmoment bedingten Lösbarkeit des Presssitzes, beispielsweise für eine Überlastsicherung, gezielt alle Stärken des Presssitzes einstellbar sind. Die Langzeitfestigkeit der erfindungsgemäßen Vorrichtung ist durchaus gegeben, da die Massivheit des Umformwerkzeuges verfahrensbedingt beliebig gewählt werden kann. Lediglich die konstruktive Machbarkeit von Dichtungsanordnungen hinsichtlich ihrer Miniaturisierung bestimmt die Kleinheit des Außendurchmessers der Bauteile. Somit können im Vergleich zu bekannten Vorrichtungen wesentlich kleinere Bauteile miteinander gefügt werden.

Die Dichtungsanordnungen sind in ein Dichtungsmodul integriert, das in eine umlaufende Aussparung der Gravur des Umformwerkzeuges eingesetzt ist. Hierdurch ist in einfacher Weise möglich, die erfindungsgemäße Vorrichtung auf unterschiedliche Anwendungszwecke maßgeschneidert umzurüsten. Dabei müssen nur vormontierte Module vorhanden sein, die dann dem Umformwerkzeug schnell entnommen und ausgetauscht werden können. Somit können die Dichtungsanordnungen und eine Distanzhülse als Gesamtheit ausgetauscht werden und brauchen nicht einzeln entnommen und befestigt zu werden. Weiterer Bestandteil des Moduls kann auch ein Abschlussring sein, da dieser auf den Durchmesser der Dichtungsanordnung abgestimmt sein und daher mit Austausch dieser Anordnung ebenfalls gewechselt werden muss.

Zweckmäßige Ausgestaltungen der Erfindung können den Unteransprüchen entnommen werden; im übrigen ist die Erfindung anhand eines in den Zeichnungen dargestellten Ausführungsbeispieles nachfolgend näher erläutert; dabei zeigt:
- Fig. 1: in einem seitlichen Längsschnitt ein Umformwerkzeug einer erfindungsgemäßen Vorrichtung ohne zu fügende Bauteile,
- Fig. 2: in einem Querschnitt ein äußeres und ein inneres Bauteil in Schiebelage vor dem Erzeugen eines Presssitzes,
- Fig. 3: im Querschnitt die Bauteile aus Fig. 2 nach dem Erzeugen des Presssitzes.

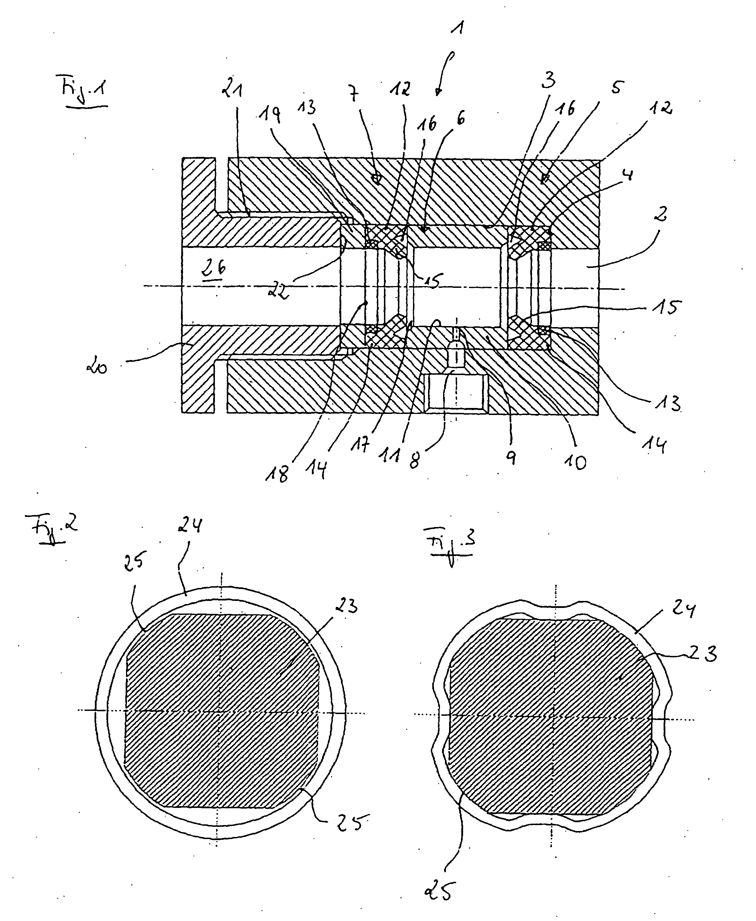

In Fig. 1 ist ein Umformwerkzeug 1 einer Vorrichtung zum Verbinden zweier Bauteile mittels fluidischen Hochdruckes dargestellt, das massiv und einstückig ausgebildet ist und eine Durchführung aufweist, die die Werkzeuggravur 2 bildet. Anstatt der einfachen apparativen Gestaltung der Einstückigkeit kann das Umformwerkzeug 1 auch in ein Ober- und ein Untergesenk geteilt sein, was Vorteile in der Zugänglichkeit zu den zu fügenden Bauteilen, insbesondere dann, wenn die Bauteile im Schiebeverbund in das Umformwerkzeug 1 eingebracht werden und dabei exakt zueinander axial und/oder radial positioniert bleiben müssen, erbringt. In die Gravur 2 ist eine umlaufende Aussparung 3 eingearbeitet, die axial einseitig offen ist. Die Aussparung 3 nimmt zwei Dichtungsanordnungen 5 und 7, sowie eine diese voneinander beabstandende Distanzhülse 6 auf. An der axialen Anschlagfläche 4 der Aussparung 3 stützt sich die Dichtungsanordnung 5 ab, an dieser axial die Distanzhülse 6 und an dieser wiederum axial die weitere Dichtungsanordnung 7 ab. Obwohl die Dichtungsanordnungen 5 und 7 auch in axial voneinander getrennten Ringnuten der Gravur 2 einsetzbar wären und eine Distanzhülse 6 entfallen würde, bietet die dargestellte Lösung eindeutige Vorzüge in der Einsetzbarkeit bzw. Austauschbarkeit der Dichtungsanordnungen 5 und 7 bei Verschleiß der Dichtungsanordnungen oder bei Verwendung andersartiger - größerer oder kleinerer - Dichtungsanordnungen im Falle des Anwendungswechsels auf größere oder kleinere Bauteile oder auf Bauteile anderer Querschnittsform.

Das Umformwerkzeug 1 weist einen Druckkanal 8 auf, der einerseits an einen externen Fluidhochdruckerzeuger angeschlossen ist und von außen in die den Schiebeverbund aufnehmende Gravur 2 des Werkzeuges 1 führt. Die Ausmündung 9 des Druckkanals 8 ist an der Stelle des herzustellenden Presssitzes gelegen. Dabei führt der Druckkanal 8 in einfacher Weise durch die Wandung 10 der Distanzhülse 6 hindurch, deren Innenseite 11 den überwiegenden Teil der Gravur 2 des Umformwerkzeuges 1 entlang der Stelle des herzustellenden Presssitzes bildet, was die Gestaltung des Umformwerkzeuges 1 vereinfacht und die Kompaktheit des Werkzeuges 1 vergrößert. Um eine möglichst gleichmäßige Druckbeauschlagung des Schiebeverbundes an der Stelle des herzustellenden Presssitzes zu erreichen, kann in die Gravur 2 im Falle des Fehlens einer Distanzhülse 6 oder in die Innenseite 11 der Distanzhülse 6 eine umlaufende Ausnehmung eingearbeitet sein, in die der Druckkanal 8 ausmündet und die entlang der Stelle des herzustellenden Presssitzes verläuft. Dies ist besonders vorteilhaft, wenn der Schiebeverbund eng an der Gravur 2 bzw. der Innenseite 11 der Distanzhülse 6 anliegt.

Denkbar ist auch, dass die Ausmündung 9 des Druckkanals 8 oder die besagte Ausnehmung zur Gravur 2 hin von einer elastischen Membran abgedeckt ist, die an der Gravur 2 oder der Innenseite 11 der Distanzhülse 6 befestigt ist. Mittels der Membran wird eine trockene Umformung des Schiebeverbundes erreicht, wobei sich bei Fluiddruckerzeugung die Membran druckvermittelnd an das äußere Bauteil des Schiebeverbundes anlegt. Dies ist zum einen zur Schonung korrosionsempfindlicher Bauteilmaterialien und zum anderen zur Ressourcenschonung vorteilhaft. Darüber hinaus kann in werkzeugvereinfachender Weise auf Dichtungsanordnungen verzichtet werden.

Die Dichtungsanordnungen 5 und 7 beinhalten einen elastischen Dichtring 12 aus einem thermoplastischen Elastomer, dessen geringer Abrieb beim Einschieben und Herausziehen des Schiebeverbundes der Bauteile eine hohe Langzeitbeständigkeit garantiert, und der einen auf der Seite, die der Stelle des herzustellenden Presssitzes abgewandt ist, anliegenden Stützring 13 aus einem Werkstoff hoher Shore-Härte beinhaltet. Der Stützring 13 besteht aus hochdruckfestem Material, ist radial elastisch und besitzt in axialer Richtung eine sehr hohe Zugfestigkeit. Als Werkstoff für den Stützring 13 ist Bronze oder ein Federstahl denkbar. Als besonders günstig bezüglich der Erfüllung der Anforderungen an den Stützring 13 hat sich der Einsatz von einem linearen aromatischen Polymer oder einem Polyoxylenmethylenplastomer ergeben. Der Stützring 13 wird von einem axial abstehenden Bund 14 des Dichtringes 12 umgeben, wodurch der mit Vorspannung befestigte Stützring 13 den Dichtring 12 an der Stelle des Bundes 14 radial gegen die Wandung der Aussparung 3 anpresst und damit dem Dichtring 12 einen zusätzlichen Halt in der Aussparung 3 gibt. Der Dichtring 12 weist des weiteren eine umlaufende in die Gravur 2 des Umformwerkzeuges 1 und entgegen der Richtung der axialen Druckkomponente des das äußere Bauteil umformenden Hochdruckes schräg abragende Dichtlippe 15 auf, die vom Stützring 13 axial gestützt wird um Spaltextrusionen des Dichtringes 12 in den Spalt, der zwischen dem Schiebeverbund und der Gravur 2 außerhalb der Hochdruckbeaufschlagung besteht und in dem Atmosphärendruck herrscht, bei der Fluidhochdruckerzeugung zu vermeiden und damit den Verschleiß des Dichtringes 12 zu minimieren.

Die Dichtlippe 15 besitzt einen kleineren Außendurchmesser als der Außendurchmesser des Schiebeverbundes. Dadurch wird die Dichtlippe 15 beim Einschieben des Schiebeverbundes oder der einzelnen Bauteile in die Gravur 2 des Umformwerkzeuges 1 von dem Schiebverbund bzw. von dessen Bauteilen zurückgebogen, so dass der Dichtring 12 außen am äußeren Bauteil des Schiebeverbundes unter Vorspannung anliegt und damit eine Dichtwirkung schon vor dem Fluiddruckaufbau aufbringt. Darüber hinaus überbrückt die Dichtlippe 15 den sich bei der plastischen Umformung des äußeren Bauteils vergrößernden Spalt zwischen der Innenseite 11 der Distanzhülse 6 und dem äußeren Bauteil durch elastische Rückfederung in ihre Ausgangslage entsprechend der Nicht-Gebrauchsstellung vor dem Einschieben des Schiebeverbundes. Hierbei können in vorteilhafter Weise relativ große Spalte hochdruckdicht überbrückt werden. In den Dichtring 12 ist eine in axialer Richtung zur Distanzhülse 6 hin offene kerbförmige Ringnut 16 eingearbeitet, deren äußere Flanke die Oberseite der Dichtlippe 15 bildet. Durch die Ringnut 16 wird der Dichtlippe 15 ausreichend Elastizität gegeben, um sich zur Gewährleistung ausreichender Dichtfähigkeit möglichst gut an dem äußeren Bauteil des Schiebeverbundes anlegen zu können. Hierbei soll die Tiefe der Ringnut 16 nicht so groß bemessen sein, dass eine Rissgefahr des Dichtringes 12 auftritt, jedoch groß genug sein, um ausreichende Elastizität der Dichtlippe 15 zu sichern. Die Distanzhülse 6 weist stirnseitig auf beiden Seiten eine umlaufende Fase 17 auf, über die der Druckkanal 8 mit der Ringnut 16 des Dichtringes 12 fluidisch verbindbar ist. Bei Fluidhochdruckerzeugung wird dadurch die Dichtlippe 15 mittels des Druckfluides zusätzlich über die Ringnut 16 beaufschlagt, so dass diese unter Bildung völliger Hochdruckdichtigkeit mit hoher Kraft an das äußere Bauteil des Schiebeverbundes gepresst wird. Hierbei zeigt sich die Neigung der Dichtlippe 15 von Vorteil, da eine radiale Komponente des Fluidhochdruckes auf die Lippe 15 wirken kann.

Am offenen Ende 18 der Aussparung 3 ist ein aus einem unelastischen Material bestehender Abschlussring 19 angeordnet, der axial abstützend an der Dichtungsanordnung 7 anliegt. Die Vorrichtung beinhaltet des weiteren einen Axialstempel 20, mittels dessen der Abschlussring 19 beaufschlagbar ist. Der Axialstempel 20 ist in eine sich an das offene Ende 18 der Aussparung 3 anschließende querschnittserweiterte Bohrung 21 eingeführt und hält die Dichtungsanordnungen 5 und 7 sowie die Distanzhülse 6 entgegen dem Hochdruck bei der Herstellung der Fügeverbindung in Position, in dem er den Abschlussring 19 abstützt. Der Abschlussring 19 als Einzelteil ist infolge des konisch zulaufenden Bohrungsauslaufes erforderlich und überbrückt den mit dem Auslauf zusammenhängenden Abstand zwischen der Dichtungsanordnung 7 und der Stirnseite 22 des Axialstempels 20. Es ist auch denkbar, mittels des Axialstempels 20 schon vor dem Aufbau des fluidischen Hochdruckes eine Axialkraft auf die Dichtungsanordnungen 5 und 7 wirken zu lassen. Bei eingeschobenem Schiebeverbund werden diese infolge ihrer Elastizität durch den Stempel 20 axial zusammengepresst, wodurch sich die Dichtringe 12 radial nach innen ausdehnen und an den Schiebeverbund mit erheblich Kraft anlegen, was schon vorab, d.h. vor Fluidhochdruckaufbau zu einer hohen Dichtwirkung führt. Um dem hohen Fluiddruck Widerstand leisten zu können, wird der Axialstempel 20 hydraulisch betätigt. Im dargestellten Ausführungsbeispiel jedoch wird die Hydraulik eingespart, dadurch, dass der Axialstempel 20 in Form einer Hohlschraube ausgebildet ist, die in ein Innengewinde der Bohrung 21 eingeschraubt ist. Alternativ ist dazu denkbar, dass der Axialstempel 20 und die Bohrung 21 so gestaltet sind, dass sie nach Art eines Bajonettverschlusses zusammenwirken.

Die Dichtungsanordnungen 5 und 7 sind in ein Dichtungsmodul integriert, das in eine umlaufende Aussparung der Gravur 2 des Umformwerkzeuges 1 eingesetzt ist. Das Modul beinhaltet des weiteren neben den Dichtungsanordnungen 5 und 7 die Distanzhülse 6, die die beiden Dichtungsanordnungen 5 und 7 voneinander beabstandet, und einen Träger für die Dichtungsanordnungen 5,7 und die Distanzhülse 6. Dabei müssen nur vormontierte Module vorhanden sein, die dann dem Umformwerkzeug 1 schnell entnommen und ausgetauscht werden können. Somit können die Dichtungsanordnungen 5 und 7 und die Distanzhülse 6 als Gesamtheit ausgetauscht werden und brauchen nicht einzeln entnommen und befestigt zu werden. Weiterer Bestandteil des Moduls kann auch der Abschlussring 19 sein, da dieser auf den Durchmesser der Dichtungsanordnung 7 abgestimmt sein und daher mit Austausch dieser Anordnung ebenfalls gewechselt werden muss.

Das Verfahren zum Verbinden zweier Bauteile mittels fluidischen Hochdruckes verläuft wie folgt. Zwei Bauteile, ein inneres 23 und ein äußeres 24, werden in geeigneter Weise aufeinander geschoben werden, so dass eine Überlappung oder gar eine vollständige Überdeckung der beiden Bauteile 23,24 erreicht wird, die dabei im Schiebesitz lose miteinander verbunden sind (Fig. 2). Das innere Bauteil 23 kann hohl ausgebildet sein, besteht hier jedoch aus Vollmaterial und besitzt einen polygonalen Querschnitt, wobei die Ecken miteinander durch eine Wölbung 25 des Vollmaterials verbunden sind. Diese Wölbung 25 ermöglicht beim späteren Anpressen des äußeren Bauteils 24 eine sanfte Anlage und verhindert gleichzeitig eine bauteil- und verbindungsschädigende Kerbwirkung. Das Bauteil 23 kann alternativ auch jede andere Form aufweisen. Das Bauteil 24 ist hier zylindrisch ausgebildet, kann jedoch auch andere Hohlquerschnittsformen aufweisen. Der Schiebeverbund kann außerhalb des Umformwerkzeuges 1 hergestellt werden und anschließend in das Umformwerkzeug 1 eingeschoben - oder bei geteiltem Werkzeug 1 eingelegt -werden. Denkbar ist auch den Schiebeverbund erst im Umformwerkzeug 1 zu bewerkstelligen, wobei es konstruktiv erforderlich ist, die einzelnen Bauteile 23 und 24 von beiden Seiten des Umformwerkzeuges 1 in dessen Gravur 2 einschieben zu können. Die Einbringung des Schiebeverbundes in die Gravur 2 kann auch bei geschlossenem Umformwerkzeug 1 erfolgen, d.h., wenn der Axialstempel 20 in die Bohrung 21 eingeführt oder eingeschraubt ist und an dem Abschlussring 19 stirnseitig anliegt. Bei längeren Bauteilen 23, 24 oder bei der Herstellung des Schiebeverbundes im Werkzeug 1 besitzt im Falle des geschlossenen Werkzeuges 1 der Axialstempel 20 eine axiale Durchgangsöffnung 26, die mit der Gravur 2 des Werkzeuges 1 und der Distanzhülse 6 fluchtet und durch die der Schiebeverbund oder eines der beiden Bauteile 23,24 durchgeführt werden.

Alsdann wird ein fluidischer Hochdruck aufgebracht, in dem der externe Fluidhochdruckerzeuger betätigt wird und ein Druckfluid über den Druckkanal 8 auf den Schiebeverbund zwischen den Dichtungsanordnungen 5 und 7 führt. Das Druckfluid wird dann soweit gespannt, bis ein Umformdruck erreicht wird, bei dem sich das äußere Bauteil 24 des Schiebeverbundes, dessen Werkstoff eine geringere Streckgrenze aufweist als der des inneren Bauteils 23, derart plastisch verformt, dass es quasi auf das innere Bauteil 23 aufschrumpft. Der Umformdruck ist gerade so hoch, dass sich das innere Bauteil 23 nur elastisch verformt, d.h. komprimiert wird. Nachdem das äußere Bauteil 24 derart auf das innere 24 gepresst wurde, wird nun der Hochdruck entspannt, worauf das elastisch komprimierte innere Bauteil 23 und das plastisch verformte äußere Bauteil 24 elastisch zurückfedern. Da die Streckgrenzen der beiden Bauteile 23 und 24 unterschiedlich sind (R_{e,23} > R_{e,24}), federt das Innenteil 23 um einen größeren Betrag zurück als das Außenteil 24. Es bildet sich somit ein Gleichgewichtszustand aus, bei dem das Bauteil 24 unter radialer Zug- und das Bauteil 23 unter Druckspannung steht. Somit ergibt sich an der Trennfläche eine anhaltende Flächenpressung und damit ein starker Fügeverband. Die Bauteile 23 und 24 liegen damit in einem sehr starken Presssitz zumindest an mehreren Umfangsstellen reibschlüssig und aufgrund der Rotationsasymmetrie des gezeigten inneren Bauteils 23 formschlüssig aneinander, so dass sie sowohl in axialer als auch in radialer Richtung aneinander festgesetzt sind (Fig. 3).

Während im dargestellten Ausführungsbeispiel das äußere Bauteil 24 unmittelbar durch das Druckfluid beaufschlagt wird, kann der Hochdruck auch mittels einer an der Gravur 2 oder der Distanzhülse 6 angebrachten Membrane auf das Bauteil 24 übertragen werden. Weiterhin muss das äußere Bauteil 24 mit dem inneren Bauteil 23 nicht zwangsläufig über den gesamten Überlappungsbereiches des Schiebeverbundes verpresst werden sondern je nach Dimensionierung des Abstandes der Dichtungsanordnungen 5 und 7 zueinander nur über einen axialen Teilabschnitt des Überlappungsbereiches. Des weiteren ist im Rahmen der Erfindung denkbar, dass bei der Verwendung eines hohlen, insbesondere röhrenförmigen inneren Bauteils 23 bei dem Erfordernis sehr hoher Umformdrücke das Bauteil 23 innenseitig mir einem massiven Gegenhaltewerkzeug abzustützen. Anderenfalls wird in apparativ und verfahrenstechnisch einfacher Weise das äußere Bauteil 24 an die Außenwandung des inneren hohlen Bauteils 23 abstützungsfrei bezüglich des inneren Bauteils 23 gepresst.

Die Erfindung kann seine Anwendung beispielsweise im Karosseriebau bei Rohbaustrukturen von Fahrzeugen, Lenksäulen oder bei Stoßfängerbiegeträgern finden.

## Patentansprüche

1. Vorrichtung zum Verbinden zweier Bauteile (23,24) mittels fluidischen Hochdruckes, mit einem Fluidhochdruckerzeuger und einem Umformwerkzeug (1), das mit dem Fluidhochdruckerzeuger fluidisch verbunden ist und mittels dessen der Schiebeverbund der aufeinandergeschobenen Bauteile (23,24) derart mit dem Hochdruckfluid beaufschlagbar ist, dass die Bauteile (23,24) in einem Presssitz aneinander liegen, wobei das Umformwerkzeug (1) dazu geeignet ist, den Schiebeverbund zumindest an der Stelle des herzustellenden Presssitzes zu umgeben, und einen Druckkanal (8) aufweist, der, angeschlossen an den Fluidhochdruckerzeuger, von außen in die den Schiebeverbund aufnehmende Gravur (2) des Werkzeuges (1) führt und dessen Ausmündung (9) an der Stelle des herzustellenden Presssitzes gelegen ist, und wobei an der Innenseite der Gravur (2) beidseitig der Stelle des herzustellenden Presssitzes eine Dichtungsanordnung (5,7) angebracht ist, die diese axial hochdruckdicht abdichtet,
**dadurch gekennzeichnet,**
**dass** die Dichtungsanordnung (5,7) in ein Dichtungsmodul integriert ist, das in eine umlaufende Aussparung (3) der Gravur (2) des Umformwerkzeuges (1) eingesetzt ist.

2. Vorrichtung nach Anspruch 1,
**dadurch gekennzeichnet,**
**dass** die Dichtungsanordnung (5,7) einen elastischen Dichtring (12) aus einem Elastomer und einen an diesem auf der Stelle des Presssitzes abgewandter Seite anliegenden Stützring (13) aus einem Werkstoff hoher Shore-Härte beinhaltet.

3. Vorrichtung nach Anspruch 2,
**dadurch gekennzeichnet,**
**dass** der Dichtring (12) eine umlaufende in die Gravur (2) des Umformwerkzeuges (1) und entgegen der Richtung der axialen Druckkomponente des das äußere Bauteil (24) umformenden Hochdruckes schräg abragende Dichtlippe (15) aufweist, die vom Stützring (14) abgestützt ist.

4. Vorrichtung nach einem der Ansprüche 1 bis 3,
**dadurch gekennzeichnet,**
**dass** das Modul neben den Dichtungsanordnungen (5,7) eine Distanzhülse (6), die die beiden Dichtungsanordnungen (5,7) voneinander beabstandet, und einen Träger für die Dichtungsanordnungen (5,7) und die Distanzhülse (6) beinhaltet.

5. Vorrichtung nach Anspruch 4,
**dadurch gekennzeichnet,**
**dass** der Druckkanal (8) durch die Wandung (10) der Distanzhülse (6) hindurchführt.

6. Vorrichtung nach einem der Ansprüche 4 oder 5,
**dadurch gekennzeichnet,**
**dass** die Innenseite (11) der Distanzhülse (6) den überwiegenden Teil der Gravur (2) des Umformwerkzeuges (1) entlang der Stelle des herzustellenden Presssitzes bildet.

7. Vorrichtung nach einem der Ansprüche 1 bis 6,
**dadurch gekennzeichnet,**
**dass** der Druckkanal (8) gravurseitig in eine umlaufende Ausnehmung ausmündet, die entlang der Stelle des herzustellenden Presssitzes verläuft.

8. Vorrichtung nach Anspruch 7,
**dadurch gekennzeichnet,**
**dass** die Ausnehmung zur Gravur (2) hin von einer elastischen Membran abgedeckt ist, die an der Gravurwandung oder der Innenseite (11) der Distanzhülse (6) befestigt ist.

9. Vorrichtung nach einem der Ansprüche 1 bis 8,
**dadurch gekennzeichnet,**
**dass** in die Gravur (2) eine umlaufende Aussparung (3) eingearbeitet ist, die axial einseitig offen ist und die die Dichtungsanordnungen (5,7) samt einer diese voneinander beabstandenden Distanzhülse (6) aufnimmt, dass an der am offenen Ende (18) der Aussparung (3) liegenden Dichtungsanordnung (7) ein aus einem unelastischen Material bestehender Abschlussring (19) anliegt, und dass die Vorrichtung einen Axialstempel (20) beinhaltet, mittels dessen der Abschlussring (19) beaufschlagbar ist.

10. Vorrichtung nach Anspruch 9,
**dadurch gekennzeichnet,**
**dass** der Axialstempel (20) eine axiale Durchgangsöffnung (26) zur Durchführung der aufeinander geschobenen Bauteile (23,24) aufweist.

11. Vorrichtung nach einem der Ansprüche 9 oder 10,
**dadurch gekennzeichnet,**
**dass** der Axialstempel (20) in Form einer Hohlschraube ausgebildet ist, die in ein Innengewinde einer sich an das offene Ende (18) der Aussparung (3) anschließenden querschnittserweiterten Bohrung (21) einschraubbar ist.

12. Vorrichtung nach einem der Ansprüche 9 oder 10,
**dadurch gekennzeichnet,**
**dass** der Axialstempel (20) hydraulisch betätigbar ist.

13. Vorrichtung nach einem der Ansprüche 1 bis 12,
**dadurch gekennzeichnet,**
**dass** das Umformwerkzeug (1) einstückig ausgebildet ist.

## Claims

1. Device for joining two components (23, 24) by means of high fluidic pressure, with a high fluid pressure generator and a forming die (1) in fluidic communication with the high fluid pressure generator, by means of which the sliding connection of the components (23, 24), one of which is pushed over the other, can be acted upon by the high-pressure fluid in such manner that the said components (23, 24) are brought into press-fitting contact with one another, the forming die (1) being such as to surround the said sliding connection at least around the press-fit to be produced, said die having a pressure duct (8) which is connected to the high fluid pressure generator and which leads from outside into the cavity (2) of the die (1) that accommodates the sliding connection, the opening (9) of the said duct being positioned at the location of the press-fit to be produced, and such that on the inside of the cavity (2), on both sides of the location of the press-fit to be produced, sealing element (5, 7) are fitted which provide an axial high-pressure-tight seal of the said location,
**characterised in that**
the sealing elements (5, 7) are integrated in a sealing module which is accommodated in an all-round recess (3) of the cavity (2) of the die (1).

2. Device according to Claim 1,
**characterised in that**
the sealing arrangement (5, 7) comprises an elastic sealing ring (12) made from an elastomer, and a support ring (13) made from a material with high Shore hardness in contact therewith on the side facing away from the location of the press-fit.

3. Device according to Claim 2,
**characterised in that**
the sealing ring (12) comprises an all-round sealing lip (15) in the cavity (2) of the die (1), which projects obliquely towards the direction of the axial pressure component of the high pressure that deforms the outer component (24) and is supported by the support ring (14).

4. Device according to any of Claims 1 to 3,
**characterised in that**
besides the sealing elements (5, 7) the sealing module comprises a spacer sleeve (6) which keeps the two sealing element (5, 7) apart, and a carrier for the sealing elements (5, 7) and the spacer sleeve (6).

5. Device according to Claim 4,
**characterised in that**
the pressure duct (8) passes through the wall (10) of the spacer sleeve (6).

6. Device according to either of Claims 4 or 5,
**characterised in that**
the inside (11) of the spacer sleeve (6) constitutes the main part of the cavity (2) of the forming die (1) along the location of the press-fit to be produced.

7. Device according to any of Claims 1 to 6,
**characterised in that**
on the die cavity side, the pressure duct (8) opens into an all-round recess which extends along the location of the press-fit to be produced.

8. Device according to Claim 7,
**characterised in that**
the recess in the cavity (2) is covered by an elastic membrane, which is attached to the cavity wall or to the inside (11) of the spacer sleeve (6).

9. Device according to any of Claims 1 to 8,
**characterised in that**
an all-round recess (3) is formed in the cavity (2), which is axially open on one side and which accommodates the sealing elements (5, 7) together with the spacer sleeve (6) that keeps them apart, a closing ring (19) made from an inelastic material rests in contact with the sealing element (7) at the open end (18) of the recess (3), and the device comprises an axial ram (20) that can act upon the said closing ring (19).

10. Device according to Claim 9,
**characterised in that**
the axial ram (20) has an axial through-going opening (26) through which the components (23, 24), the one pushed over the other, can be passed.

11. Device according to either of Claims 9 or 10,
**characterised in that**
the axial ram (20) is formed as a hollow screw-bolt which can be screwed into an internal thread of a bore (21) of enlarged cross-section located after the open end (18) of the recess (3).

12. Device according to either of Claims 9 or 10,
**characterised in that**
the axial ram (20) can be actuated hydraulically.

13. Device according to any of Claims 1 to 12,
**characterised in that**
the forming die (1) is constructed in one piece.

## Revendications

1. Dispositif pour joindre deux éléments de construction (23, 24) par haute pression fluidique, avec un générateur de haute pression de fluide et un outil de formage (1) qui est en liaison fluidique avec le générateur de haute pression de fluide et à l'aide duquel la liaison coulissante des éléments de construction (23, 24) coulissants l'un sur l'autre peut être frappée par le fluide sous haute pression de manière à ce que les éléments de construction (23, 24) soient placés l'un à côté de l'autre par ajustage serré, l'outil de formage (1) étant adapté pour entourer la liaison coulissante au moins à l'emplacement de l'ajustage serré à réaliser et comportant un conduit de refoulement (8) qui, raccordé au générateur de haute pression de fluide, conduit de l'extérieur dans la gravure (2) de l'outil (1) recevant la liaison coulissante et dont la sortie (9) est placée à l'emplacement de l'ajustage serré à réaliser, et un dispositif d'étanchéité (5, 7) étant monté sur le côté intérieur de la gravure (2) de chaque côté de l'emplacement de l'ajustage serré à réaliser, lequel dispositif étanche celle-ci dans le sens axial, **caractérisé en ce que** le dispositif d'étanchéité (5, 7) est intégré dans un module d'étanchéité qui est enfoncé dans un évidement circulaire (3) de la gravure (2) de l'outil de formage (1).

2. Dispositif selon la revendication 1, **caractérisé en ce que** le dispositif d'étanchéité (5, 7) comprend une bague d'étanchéité élastique (12) faite en élastomère et une bague d'appui (13) faite en une matière ayant une dureté Shore élevée, s'appuyant sur celle-ci du côté opposé à l'emplacement de l'ajustage serré.

3. Dispositif selon la revendication 2, **caractérisé en ce que** la bague d'étanchéité (12) comporte une lèvre d'étanchéité (15) circulaire faisant saillie en biais dans la gravure (2) de l'outil de formage (1) et en sens inverse de la composante de pression axiale de la haute pression déformant l'élément de construction extérieur (24), qui est soutenue par la bague d'appui (14).

4. Dispositif selon l'une quelconque des revendications 1 à 3, **caractérisé en ce que** le module, outre les dispositifs d'étanchéité (5, 7), comprend une douille d'écartement (6) qui maintient une distance entre les deux dispositifs d'étanchéité (5, 7), et un support pour les dispositifs d'étanchéité (5, 7) et la douille d'écartement (6).

5. Dispositif selon la revendication 4, **caractérisé en ce que** le conduit de refoulement (8) passe à travers la paroi (10) de la douille d'écartement (6).

6. Dispositif selon l'une quelconque des revendications 4 ou 5, **caractérisé en ce que** le côté intérieur (11) de la douille d'écartement (6) forme la majeure partie de la gravure (2) de l'outil de formage (1) le long de l'emplacement de l'ajustage serré à réaliser.

7. Dispositif selon l'une quelconque des revendications 1 à 6, **caractérisé en ce que** le conduit de refoulement (8) débouche, du côté de la gravure, dans un évidement circulaire qui s'étend le long de l'emplacement de l'ajustage serré à réaliser.

8. Dispositif selon la revendication 7, **caractérisé en ce que** l'évidement, en direction de la gravure (2), est recouvert par une membrane élastique qui est fixée à la paroi de la gravure ou au côté intérieur (11) de la douille d'écartement (6).

9. Dispositif selon l'une quelconque des revendications 1 à 8, **caractérisé en ce qu'**un évidement circulaire (3), qui est ouvert axialement d'un côté et qui reçoit les dispositifs d'étanchéité (5, 7) ainsi qu'une douille d'écartement (6) maintenant une distance entre ceux-ci, est creusé dans la gravure (2), **en ce qu'**une bague de fermeture (19) constituée d'une matière non élastique s'appuie sur le dispositif d'étanchéité (7) se trouvant à l'extrémité ouverte (18) de l'évidement (3), et **en ce que** le dispositif comprend un poinçon axial (20) à l'aide duquel la bague de fermeture (19) peut être frappée.

10. Dispositif selon la revendication 9, **caractérisé en ce que** le poinçon axial (20) comporte une ouverture de passage axiale (26) pour le passage des éléments de construction (23, 24) coulissant l'un sur l'autre.

11. Dispositif selon l'une quelconque des revendications 9 ou 10, **caractérisé en ce que** le poinçon axial (20) est conçu sous forme d'une vis creuse qui peut être vissée dans un taraudage d'un alésage (21) raccordé à l'extrémité ouverte (18) de l'évidement (3), élargissant la section transversale.

12. Dispositif selon l'une quelconque des revendications 9 ou 10, **caractérisé en ce que** le poinçon axial (20) est actionnable hydrauliquement.

13. Dispositif selon l'une quelconque des revendications 1 à 12, **caractérisé en ce que** l'outil de formage (1) est configuré en une seule pièce.
